# EUROPÄISCHE PATENTSCHRIFT

(11) **EP 3 619 447 B1**
(45) Veröffentlichungstag und Bekanntmachung des Hinweises auf die Patenterteilung: **03.03.2021**
(21) Anmeldenummer: 18724153.4
(22) Anmeldetag: 27.04.2018
(51) Int. Cl.: F16J 15/10

(54) **FLANSCHDICHTUNGSSYSTEM UND MONTAGEVERFAHREN**
FLANGE SEAL SYSTEM AND ASSEMBLY METHOD
SYSTÈME JOINT D'ÉTANCHÉITÉ DE BRIDE ET PROCÉDÉ DE MONTAGE

(30) Priorität: 03.05.2017 DE 102017109449
(43) Veröffentlichungstag der Anmeldung: 11.03.2020
(73) Patentinhaber: Voith Patent GmbH, 89522 Heidenheim (DE)
(72) Erfinder: SCHABASSER, Martin, 3123 Pfaffing (AT)
(74) Vertreter: Voith Patent GmbH - Patentabteilung
(86) Internationale Anmeldenummer: PCT/EP2018/060831
(87) Internationale Veröffentlichungsnummer: WO 2018/202565

(56) Entgegenhaltungen:
- EP-A1- 0 921 333
- WO-A2-2005/086747
- FR-A- 1 335 365
- US-A- 3 095 619

## Beschreibung

Die vorliegende Erfindung betrifft ein Flanschdichtungssystem, d.h. ein System zum Abdichten des Raumes zwischen zwei miteinander verbunden Körper, und ein Montageverfahren für ein solches System. Dabei umfasst das Flanschdichtungssystem sowohl die beiden verbunden Körper als auch die Dichtungsmittel zum Abdichten des zwischen den Körpern liegenden Raumes. Der Begriff "Flansch" beinhaltet dabei, dass die beiden verbunden Körper jeweils eine ebene Fläche aufweisen, mit denen die beiden Körper so aneinandergrenzen, dass die ebenen Flächen annähernd parallel zueinander verlaufen. Dabei kann ein Abstand zwischen den beiden Flächen vorgesehen sein. Die beiden Körper können aber auch direkt aneinander stoßen, wobei auch in diesem Fall eine Dichtung notwendig ist, da sich durch die gewöhnlich vorliegende Oberflächenrauigkeit auch bei einem direkten aneinander Angrenzen der beiden Körper ein zu dichtender Zwischenraum zwischen den Flächen ergibt.

In vielen technischen Anwendungen ergibt sich die Aufgabe, den Zwischenraum zwischen zwei Flächen abzudichten, mit denen zwei miteinander verbundene Körper aneinandergrenzen. Das wohl bekannteste und am meisten eingesetzte Dichtungssystem dieser Art besteht aus einem O-Ring, welcher in eine entsprechende Nut in einem der beiden Körper eingelegt wird. Beim Verschrauben der beiden Körper wird der Dichtungsring gequetscht und dichtet so den Raum zwischen den Flächen im umschlungenen Bereich ab. Leichte Verschiebungen der Körper zueinander beeinträchtigen dabei die Dichtigkeit nicht. Problematisch wird es jedoch, wenn der gewünschte Verlauf der Dichtung keine einfache Linie mehr ist, sondern z.B. Verzweigungen aufweist. An solchen Stellen müssen den O-Ringen entsprechende Dichtungen aneinander stoßen. Diese Stellen sind oft problematisch in der Montage und auch bezüglich der zu erreichenden Dichtheit. Aus dem Stand der Technik sind Lösungen dieses Problems bekannt, die auf der Verwendung von Dichtungen beruhen, die aus einem Stück sind und entsprechende Verzweigungen aufweisen (vgl. beispielsweise die DE 1 215 454). Die Verwendung von solch speziell angefertigten Dichtungen ist jedoch oftmals, z.B. bei Kleinserien, nicht wirtschaftlich anwendbar. Der Erfinder hat sich die Aufgabe gestellt ein gattungsgemäßes Dichtsystem anzugeben, das es erlaubt, komplizierte Dichtverläufe kostengünstig zu realisieren, und dabei zuverlässig dichtet und einfach zu montieren ist. Das erfindungsgemäße Dichtsystem lässt sich jedoch auch vorteilhaft in Anordnungen verwenden, die keine Verzweigungen aufweisen

US 3095619 offenbart ein Flanschdichtungssystem, wobei eine Nut mit einer aufblasbaren aushärtenden Flüssigkeit gefüllt wird, auf dem ein elastische Profil sitzt.

Der Erfinder hat erkannt, dass die gestellte Aufgabe durch ein Dichtsystem mit den Merkmalen des Anspruchs 1 gelöst werden kann. Vorteilhafte Ausführungsformen ergeben sich aus den von Anspruch 1 abhängigen Unteransprüchen. Das erfindungsgemäße Verfahren zur Montage eines solchen Dichtsystems ergibt sich aus dem unabhängigen Verfahrensanspruch. Vorteilhafte Ausführungsformen ergeben sich aus abhängigen Verfahrensansprüchen.

Der Erfinder hat sich von dem Gedanken leiten lassen, den O-Ring bzw. eine entsprechende Dichtung durch eine aushärtende Flüssigkeit zu ersetzen. Der Erfinder hat jedoch erkannt, dass es nicht zielführend ist, wenn lediglich der von der Nut definierte Hohlraum mit einer aushärtenden Flüssigkeit gefüllt wird. Denn nach dem Aushärten der Flüssigkeit dürfte es zu keinen Verschiebungen der verbunden Körper mehr kommen, da diese Verschiebungen durch die Volumenkonstanz der gehärteten Flüssigkeit dazu führen würden, dass das Material selber bzw. der Haftverbund desselben zerstört werden würde. Das wird dadurch umgangen, dass in die Nut ein H-förmiges Profil eingelegt wird, welches verhindert, dass die aushärtende Flüssigkeit mit den Seitenwänden der Nut in Kontakt kommt. So kann zumindest ein Abheben der beiden miteinander verbunden Körper ermöglicht werden, da nun das dafür benötigte Volumen aus der Querkontraktion zur Verfügung steht.

Die erfindungsgemäße Lösung wird nachfolgend anhand von Figuren erläutert. Darin ist im Einzelnen folgendes dargestellt:
- Figur 1: H-förmiges Profil im Schnitt;
- Figur 2: H-förmiges Profil in Draufsicht;
- Figur 3: Erfindungsgemäßes Dichtsystem in einer ersten Ausführungsform;
- Figur 4: Erfindungsgemäßes Dichtsystem in einer zweiten Ausführungsform;
- Figur 5: Erfindungsgemäßes Dichtsystem in einer dritten Ausführungsform;
- Figur 6: Erfindungsgemäßes Dichtsystem in einer vierten Ausführungsform;
- Figur 7: Erfindungsgemäßes Dichtsystem in einer fünften Ausführungsform;
- Figur 8: Verfahren zur Montage des erfindungsgemäßen Dichtsystems.

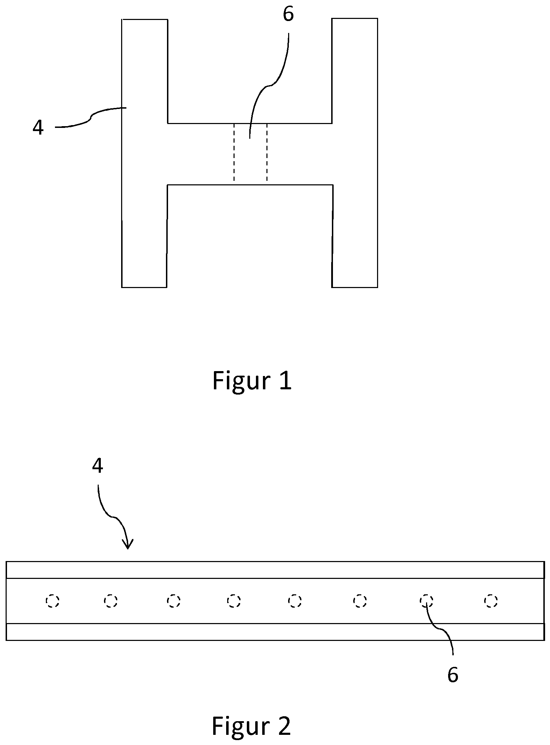

Figur 1 zeigt einen Schnitt durch ein H-förmiges Profil, wie es in dem erfindungsgemäßen Dichtsystem zum Einsatz kommt. Das H-förmige Profil ist dabei mit 4 bezeichnet. Das Profil kann aus allen bekannten flexiblen Materialien bestehen, die für Dichtungen verwendet werden. Wie der Buchstabe H weißt der Querschnitt des Profils zwei vertikale parallel verlaufende holmartige Bereiche auf, welche durch einen dazwischen gelegenen horizontalen Bereich verbunden werden. Der horizontale Bereich ist dabei so angeordnet, dass auf beiden Seiten des horizontalen Bereichs jeweils ein zwischen den vertikalen Bereichen liegender Raum frei bleibt. Mit anderen Worten darf der horizontale Bereich die beiden vertikalen Bereiche nicht so verbinden, dass er ganz am Ende der vertikalen Bereiche angeordnet ist. In diesem Fall könnte man das Profil auch nicht mehr H-förmig nennen, sondern der Begriff U-förmig wäre viel angemessener. Die verwendeten Begriffe "vertikal" und "horizontal" sagen dabei nichts über die Orientierung des Dichtsystems im endgültigen Einbauzustand oder während der Montage in einem größeren System aus. Bei der Montage muss je nach Ausführungsform lediglich dafür gesorgt sein, dass die verwendete aushärtende Flüssigkeit so eingebracht werden kann, dass sie an die vorgesehenen Stellen des Dichtungssystems gelangen kann. Nach dem Aushärten der Flüssigkeit kann dann das Dichtsystem in jeder beliebigen Lage orientiert sein. Es ist von Vorteil, wenn der horizontale Bereich des H-förmigen Profils 4 durchgehende Öffnungen aufweist, da so die aushärtende Flüssigkeit einfacher eingefüllt werden kann (s.u.). In Figur 1 ist eine solche Öffnung mit den gestrichelten Linien angedeutet und mit 6 bezeichnet.

Figur 2 zeigt das H-förmige Profil 4 in der Draufsicht. Es werden dieselben Bezeichnungen wie in Figur 1 verwendet. Die optionalen Öffnungen 6, von denen nur eine bezeichnet ist, sind dabei mittig in regelmäßigen Abständen im horizontalen Bereich des Profils 4 angeordnet. Die gezeigte Lage der Öffnungen 6 ist dabei nur beispielhaft zu verstehen. Es sind alle denkbaren anderen Anordnungen der Öffnungen 6 im horizontalen Bereich des Profils 4 möglich.

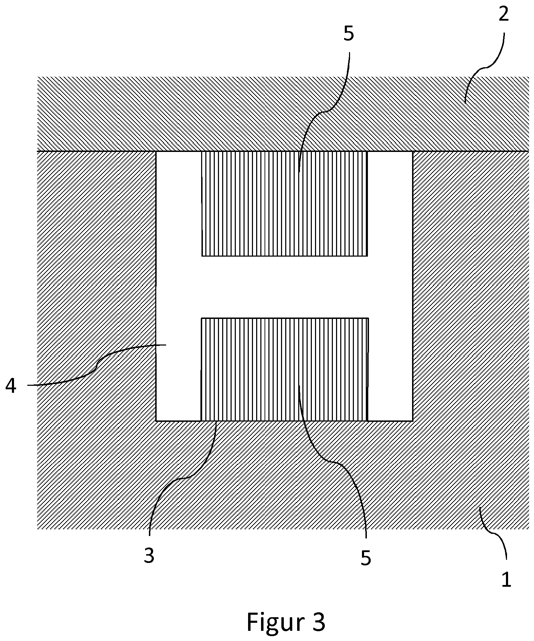

Figur 3 zeigt einen Schnitt durch das erfindungsgemäße Dichtsystem in einer ersten Ausführungsform. Dabei sind ein erster Körper mit 1 und ein zweiter Körper mit 2 bezeichnet. Der erste Körper 1 weist eine Nut auf, welche mit 3 bezeichnet ist. Das H-förmige Profil 4 ist in der Nut 3 so angeordnet, dass die horizontalen Bereiche des Profils 4 direkt an die Seitenwände der Nut 3 angrenzen. Es ist klar, dass dazu die Seitenwände der Nut 3 parallel zueinander sein müssen. Der erste Körper 1 ist mit dem zweiten Körper 2 verbunden. Die Verbindungsmittel sind in den Figuren 3 bis 6 nicht dargestellt. In der Regel sind die beiden Körper 1 und 2 miteinander verschraubt, aber es können auch alle anderen bekannten Verbindungsmittel verwendet werden, wie z.B. Klammern. Der Raum zwischen den vertikalen Bereichen des H-förmigen Profils 4 ist mit der gehärteten Flüssigkeit gefüllt. Dieser Raum zerfällt in zwei Teilräume, die über und unter dem horizontalen Bereich des Profils 4 liegen und jeweils mit 5 bezeichnet sind. Dabei muss die verwendete Flüssigkeit im gehärteten Zustand eine ausreichende Elastizität behalten. Es ist von Vorteil, wenn die Elastizität der gehärteten Flüssigkeit in etwa gleich groß wie die Elastizität des Profils 4 ist. In der gezeigten Ausführungsform grenzt der Körper 1 direkt an den Körper 2 an und das H-förmige Profil schließt bündig mit der Fläche des Körpers 1 ab, die an den Körper 2 angrenzt. Die gehärtete Flüssigkeit verklebt dabei die Sohlfläche der Nut 3 mit dem Profil 4 und die an den Körper 1 angrenzende Fläche des Körpers 2 mit dem Profil 4. An den Seitenwänden der Nut 3 liegt das Profil 4 dagegen ohne Verklebung an. Dadurch wird ein leichtes Abheben der Körper 1 und 2 voneinander ermöglicht, ohne dass die Dichtung abreißt, da sich in diesem Fall das Profil 4 in horizontaler Richtung zusammenzieht. Dies ist möglich, da zwischen den vertikalen Bereichen des Profils 4 und den Seitenwänden der Nut 3 keine Klebeverbindung besteht. Dabei kommt es auch zu einer Verformung der gehärteten Flüssigkeit 5. Eine laterale Verschiebung der Körper 1 und 2 zueinander ist jedoch zu vermeiden, da in diesem Fall die Klebeverbindung zwischen dem Profil 4 und dem Körper 2 sehr schnell zerstört werden würde.

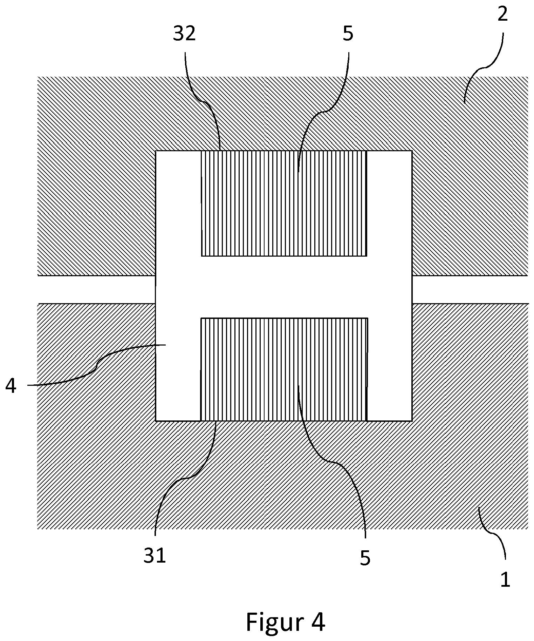

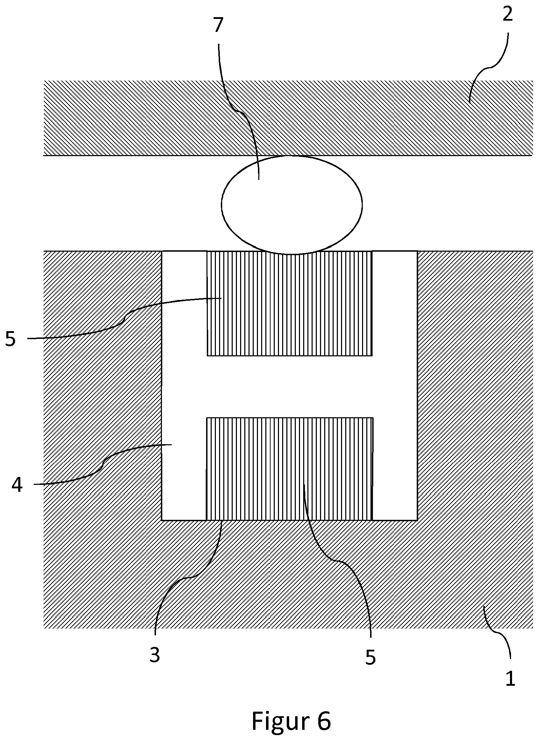

Figur 4 zeigt eine erfindungsgemäße Ausführungsform, die auch leichte laterale Verschiebungen der Körper zueinander erlaubt. Die Bezeichnungen entsprechen den Bezeichnungen aus Figur 3. Im Unterschied zu der Ausführungsform aus Figur 3 weist in Figur 4 jeder der beiden Köper 1 und 2 eine Nut auf, die einander gegenüberliegend angeordnet sind. Die beiden Nuten sind mit 31 und 32 bezeichnet. Außerdem ist ein Abstand zwischen den Körpern 1 und 2 vorgesehen. Das H-förmige Profil ist nun in beiden Nuten 31 und 32 so angeordnet, dass die horizontalen Bereiche des Profils 4 jeweils direkt an die Seitenwände der Nuten 31 und 32 angrenzen. Wiederum sind die beiden Teilräume zwischen den vertikalen Bereichen des H-förmigen Profils 4 ist mit der gehärteten Flüssigkeit gefüllt. Die gehärtete Flüssigkeit verklebt dabei die Sohlfläche der Nut 31 mit dem Profil 4 und Sohlfläche der Nut 32 mit dem Profil 4. Aufgrund des Abstandes zwischen den beiden Körpern 1 und 2 und der Elastizität des Profils 4 und der gehärteten Flüssigkeit 5 sind in dieser Ausführungsform auch leichte laterale Verschiebungen zwischen den Körpern 1 und 2 möglich, ohne dass es zu Undichtigkeiten kommen kann. Bezüglich eines Abhebens der Körper 1 und 2 gilt das für Figur 3 Gesagte. Auch eine Annäherung der beiden Köper 1 und 2 ist bis zu einem gewissen Grad möglich, solange die Elastizität des Profils 4 ausreicht um eine Extrusion desselben zu vermeiden. Aus Figur 4 geht hervor, dass das Flanschverbindungssystem in dieser Ausführungsform symmetrisch bezüglich den Körpern 1 und 2 aufgebaut ist. Diese Symmetrie kann jedoch z.B. dadurch gebrochen sein, dass eine der Nuten 31 und 32 tiefer ausgeführt wird, als die andere Nut. In diesem Fall kann es von Vorteil sein, wenn auch das H-förmige Profil 4 asymmetrisch ausgebildet wird (vgl. Figur 6).

Es ist klar, dass auch die Ausführungsform gemäß Figur 3 durch das Vorsehen eines Abstandes zwischen den Körpern 1 und 2 modifiziert werden kann, um so auch die für die Ausführungsform gemäß Figur 4 genannten zusätzlichen Verschiebungen der Köper 1 und 2 ohne Dichtigkeitsverlust abzufangen. Dann schließt das Profil 4 natürlich nicht mehr bündig mit der Oberfläche des Körpers 1 ab, sondern ragt aus der Nut 3 heraus.

Es gilt generell, dass alle sinnvollen Kombinationen der erfindungsgemäßen Ausführungsformen gemäß den Figuren 3 bis 7 durch die vorliegende Schrift mit erfasst werden, auch wenn diese nicht explizit erwähnt werden.

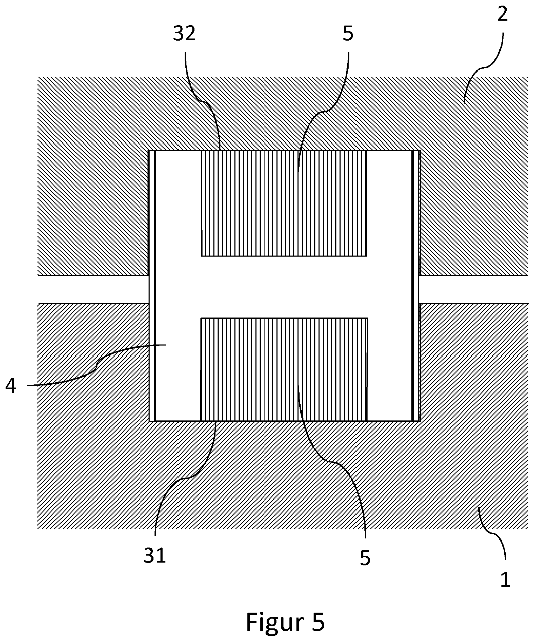

Figur 5 zeigt eine weitere Ausführungsform, die sich von der Ausführungsform gemäß Figur 4 dadurch unterscheidet, dass das Profil 4 nicht mehr direkt an die parallelen Seitenwände der Nuten 31 und 32 angrenzt. Die vertikalen Bereiche des Profils 4 verlaufen parallel zu den Seitenwänden der Nuten 31 und 32, wobei sich ein freier Raum zwischen diesen erstreckt. Dadurch ergibt sich eine höhere Toleranz des Dichtungssystems gegenüber lateralen Verschiebungen zwischen den Körpern 1 und 2 und gegenüber einer Annäherung der beiden Körper zueinander.

Die Ausführungsformen gemäß den Figuren 3, 4 und 5 zeichnen sich weiter dadurch aus, dass mit ihnen Verzweigungen im Dichtungsverlauf einfach und zuverlässig realisiert werden können. Dabei wird das Profil 4 entsprechend den Verläufen der Nuten 3, 31 bzw. 32 zugeschnitten und in dieselben eingelegt. Dabei können die Profile an den Stoßstellen optional miteinander verklebt werden. Danach werden die Körper 1 und 2 miteinander verbunden und die härtende Flüssigkeit 5 in die Räume zwischen den vertikalen Bereichen der Profile 4 eingebracht. Nach dem Aushärten der Flüssigkeit 5 kommt es zu den oben erwähnten Verklebungen. An den Stoßstellen sorgt die Flüssigkeit 5 nach dem Aushärten ebenfalls für eine Verklebung derselben. Damit die Flüssigkeit 5 in die erwähnten Räume eingebracht werden kann, muss wenigstens einer der Körper wenigstens eine Öffnung zum Einbringen der Flüssigkeit aufweisen. Außerdem sind auch in einem der Körper wenigstens eine Öffnung vorzusehen, durch die die von der eingebrachten Flüssigkeit 5 verdrängte Luft beim Einbringen der Flüssigkeit 5 entweichen kann. Falls das Profil 4 keine Öffnungen 6 im horizontalen Beriech umfasst, sind in beiden Körpern die genannten Öffnungen vorzusehen. Um eine gute und blasenfreie Verteilung der Flüssigkeit 5 in den zu füllenden Räumen zu erreichen, kann die Flüssigkeit auch unter Druck eingebracht werden. Unterstützend kann dabei sein, wenn die Körper 1 und 2 auf eine vibrierende Unterlage gestellt werden. Es ist zu erwähnen, dass kleine Lufteinschlüsse in der gehärteten Flüssigkeit 5 in nicht zu großer Anzahl das Funktionieren des erfindungsgemäßen Dichtsystems nicht beeinträchtigen.

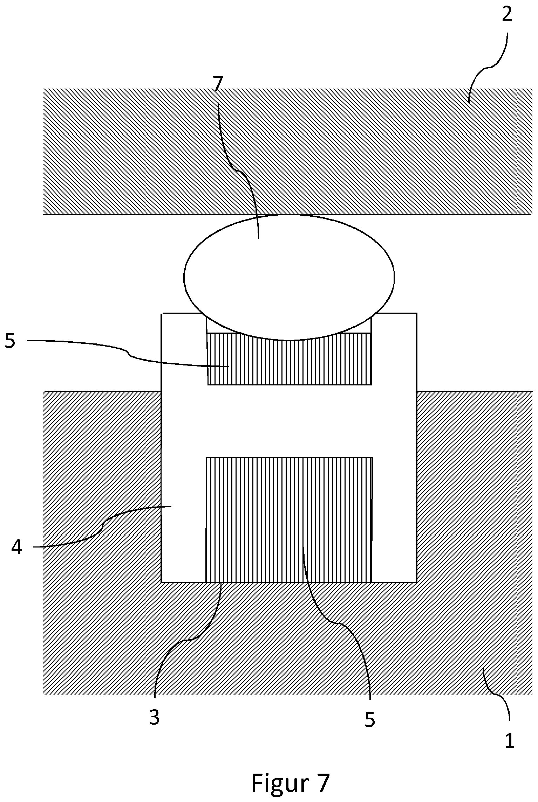

Die im Folgenden beschriebenen Ausführungsformen des erfindungsgemäßen Dichtsystems gemäß den Figuren 6 und 7 weisen neben dem H-förmigen Profil 4 ein zusätzliches Dichtelement auf. Diese Ausführungsformen sind weniger vorteilhaft im Hinblick auf Verzweigungen, bieten dafür aber andere Vorteile im Vergleich mit herkömmlichen Dichtsystemen.

Die in Figur 6 dargestellte Ausführungsform gleicht im unteren Bereich stark der Ausführungsform gemäß Figur 3. In Figur 6 befindet sich jedoch zwischen der gehärteten Flüssigkeit 5 oberhalb vom horizontalen Bereich des Profils 4 und dem Körper 2 ein weiteres Dichtelement, welches mit 7 bezeichnet ist. Dabei kann es sich z.B. um einen konventionellen O-Ring handeln. Das Dichtelement 7 wird dabei zusammen gedrückt und gleichzeitig in die angrenzende gehärtete Flüssigkeit 5 gedrückt, da diese aufgrund ihrer Elastizität nachgeben kann. Auf diese Weise ergibt sich ein Bett für das Dichtelement 7, so dass dieses nicht mehr so leicht in lateraler Richtung verrutschen kann. Außerdem ist die Dichtwirkung zwischen Körper 1 und dem Dichtelement 7 dadurch besonders gut. Ein weiterer Vorteil besteht darin, dass das Dichtelement 7 erst bei höheren Pressungen zwischen den Körpern 1 und 2 beschädigt wird verglichen mit einer herkömmlichen Flanschverbindung. Zur weiteren Führung des Dichtelements 7 kann eine Nut im Körper 2 vorgesehen sein, und/oder das Profil 4 samt gehärteter Flüssigkeit 5 in den Körper 1 eingesenkt sein.

Bei der Ausführungsform gemäß Figur 7 schließt das H-förmige Profil nicht bündig mit der Oberfläche von Körper 1 ab, sondern ragt ein Stück aus diesem heraus. Optional kann wie in Figur 7 dargestellt der Raum oberhalb dem horizontalen Bereich des H-förmigen Profils 4 nicht vollständig von der gehärten Flüssigkeit 5 gefüllt sein. Dadurch ergibt sich ebenfalls eine verbesserte Führung des Dichtelements 7. Es ist sogar möglich, dass sich im Raum oberhalb dem horizontalen Bereich des H-förmigen Profils 4 gar keine gehärtete Flüssigkeit 5 befindet (z.B. um Material zu sparen). Ein weiterer Vorteil der Ausführungsform gemäß Figur 7 besteht darin, dass auf diese Weise größere Abstände zwischen den verbunden Körpern 1 und 2 dichtend überwunden werden können. Ein weiterer Unterschied zu den vorherigen Ausführungsformen besteht darin, dass das H-förmige Profil 4 nicht symmetrisch zum horizontalen Bereich desselben ausgebildet ist, d.h. die Teile des vertikalen Bereichs, die unterhalb dem horizontalen Bereich angeordnet sind, sind länger als die, die oberhalb dem horizontalen Bereich angeordnet sind. Je nach dem Verhältnis der Elastizitätsmodule der verwendeten Materialien von Profil 4 und gehärteter Flüssigkeit 5 zueinander kann durch eine solche Asymmetrie die Steifigkeit dieses Komplexes (Profil 4 und die damit verbundene gehärtete Flüssigkeit 5) beeinflusst werden.

Für alle erfindungsgemäßen Ausführungsformen kann das Montageverfahren dahingehend modifiziert werden, dass die aushärtende Flüssigkeit 5 eingebracht wird, bevor die Körper 1 und 2 miteinander verbunden werden. Wenn der horizontale Bereich des Profils 4 Öffnungen 6 enthält, dann erübrigen sich in diesem Fall auch weitere Maßnahmen zum Abführen der durch die Flüssigkeit 5 verdrängten Luft, da diese problemlos nach oben entweichen kann. In der Regel kann dann auch auf Öffnungen im Körper 1 zum Einbringen der Flüssigkeit 5 verzichtet werden, da die Flüssigkeit 5 einfach von oben eingefüllt werden kann. Es kann auch gut beobachtet werden, ob sich die Flüssigkeit 5 gut verteilt hat, da der Körper 2 noch nicht die Sicht versperrt. Für die Ausführungsformen gemäß den Figuren 6 und 7 wird erst nach dem Aushärten der Flüssigkeit 5 das Dichtelement 7 über dem Profil 4 und der ausgehärteten Flüssigkeit 5 angeordnet und der Körper 2 mit dem Körper 1 verbunden. Optional kann das Dichtelement 7 auch über dem Profil 4 und der Flüssigkeit 5 angeordnet werden, bevor die Flüssigkeit 5 ausgehärtet ist. Dadurch kommt es zu einer Verklebung des Dichtelements 7 mit der Flüssigkeit 5, was in manchen Fällen von Vorteil sein kann, da damit ein Verrutschen des Dichtelements 7 in lateraler Richtung verhindert wird. Zur weiteren Führung des Dichtelements 7 kann eine Nut im Körper 2 vorgesehen sein. Bei den Ausführungsformen gemäß den Figuren 3, 4 und 5 wird der Körper 2 mit dem Körper 1 noch vor dem Aushärten der Flüssigkeit verbunden, damit es zu einer Verklebung des Profils 4 mit dem Körper 2 kommen kann. Für die Ausführungsform gemäß Figur 5 kann die Flüssigkeit 5 vorteilhaft auch in zwei Arbeitsgängen eingebracht werden. Damit das Profil 4 mittig in den Nuten 31 und 32 angeordnet werden kann, ist es vorteilhaft geeignete Abstandshalter zwischen den Nutwänden und den horizontalen Bereichen des Profils 4 anzuordnen bevor die Flüssigkeit 5 eingebracht wird. Es wird dann zunächst nur ein Teil der Flüssigkeit 5 eingebracht, so dass das Profil 4 nach dem Aushärten derselben im Bereich der Sohle der Nut 31 fixiert wird. Nun können die Abstandshalter wieder entfernt werden. Es wird nun die restliche Flüssigkeit 5 eingebracht und der Körper 2 mit dem Körper 1 verbunden bevor die restliche Flüssigkeit 5 ausgehärtet ist, so dass es zu einer Verklebung des Profils 4 im Sohlbereich der Nut 32 mit dem Körper 2 kommen kann. Dass das Profil 4 dabei mittig in der Nut 32 angeordnet wird, kann über geeignete Führungen zwischen den beiden Körpern 1 und 2 erreicht werden. Die erwähnten Abstandshalter können auch Mittel umfassen mit denen das Profil 4 etwas in die Nut 31 eingepresst werden kann. Dies kann von Vorteil sein, um ein Unterlaufen der Flüssigkeit 5 unter das Profil 4 zu verhindern. Solche Mittel können auch bei anderen Ausführungsformen, die keine Abstandshalter erfordern, vorteilhaft eingesetzt werden.

Da es bei der Montage des Systems wichtig ist, dass die härtende Flüssigkeit 5 an alle dafür vorgesehenen Stellen des Systems gelangen kann, sollte die Viskosität der härtenden Flüssigkeit 5 auf die Art und Weise angepasst sein, mit der die Flüssigkeit 5 eingebracht wird. Falls die Flüssigkeit 5 über Öffnungen in den Körpern 1 und 2 in das Profil 4 eingebracht wird, ist es meistens günstig, wenn die Flüssigkeit 5 eine geringe Viskosität aufweist. Falls die Flüssigkeit 5 jedoch wie im vorhergehenden Abschnitt beschrieben eingebracht wird, bevor der Körper 2 mit dem Körper 1 verbunden wird, dann kann die Flüssigkeit 5 eine höhere Viskosität haben. Es ist sogar denkbar und vorteilhaft, wenn die Flüssigkeit 5 eine so hohe Viskosität hat, dass sie die Konsistenz einer Paste annimmt und mit einem Spachtel oder ähnlichem in das Profil 4 eingestrichen bzw. eingepresst wird. Auf diese Weise kann ungewolltes Tropfen verhindert werden. Außerdem neigt eine Flüssigkeit 5 mit höherer Viskosität weniger zu einem Einlaufen in Bereiche, in die die Flüssigkeit 5 nicht gelangen sollte (z.B. in den Raum zwischen den Nutinnenwänden und dem Profil 4). Das ungewollte Verkleben des Profils 4 mit den Nutinnenwänden kann auch dadurch verhindert werden, dass die Außenseiten des Profils 4 mit einem geeigneten Antihaftmittel behandelt werden.

Als geeignete Substanzen für die Flüssigkeit 5 seien beispielhaft 2-komponentige Polyurethanharze und Silikone genannt, von denen die erstgenannten eine kleine Viskosität und die letztgenannten eine pastöse Konsistenz aufweisen können.

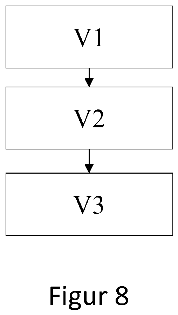

In Figur 8 ist der schematische Ablauf des Montageverfahrens abgebildet. Das Verfahren in seiner allgemeinen Form umfasst die Schritte V1, V2 und V3, die in dieser Reichenfolge ausgeführt werden. Im Schritt V1 werden die Körper 1 und 2 samt der/den benötigten Nut(en) und Öffnungen bereitgestellt. In V2 wird das H-förmige Profil 4 zugeschnitten und in eine Nut des Körpers 2 eingelegt, wobei ggf. eventuell vorhandene Stoßstellen verklebt werden können. Im Schritt V3 wird die aushärtende Flüssigkeit 5 in den Raum zwischen den vertikalen Bereichen des Profils 4 eingebracht wonach diese aushärtet. Je nach Ausführungsform erfolgt das Verbinden der Körper 1 und 2 miteinander am Ende von Schritt V2 oder am Ende von Schritt V3, wobei im letzteren Fall noch ggf. vorher das Dichtelement 7 oberhalb des Profils 4 und der gehärteten Flüssigkeit 5 angeordnet wird.

Abschließend sei noch erwähnt, dass das erfindungsgemäße Flanschdichtungssystem auch Anordnungen umfassen kann, bei denen einer der Körper 1 oder 2 aus mehreren Teilkörpern aufgebaut ist, z.B. wenn der Körper 1 mit mehreren über seiner Oberfläche angeordneten Körpern dichtend verbunden werden muss. Dabei kann es dann zu Kombinationen der oben beschriebenen Ausführungsformen kommen, z.B. wenn die Verbindung zwischen Körper 1 und einem der weiteren Körper gemäß Figur 3 ausgeführt wird und die Verbindung zwischen Körper 1 und einem anderen der weiteren Körper gemäß Figur 6. Es sind natürlich auch Kombinationen mit bereits bekannten Flanschdichtungssystemen möglich.

## Patentansprüche

1. Flanschdichtungssystem umfassend zwei Körper (1, 2), welche jeweils eine ebene Fläche aufweisen und so miteinander verbunden sind, dass die Flächen einander zugekehrt sind, wobei wenigstens einer der Körper (1, 2) eine in die ebene Fläche eingesenkte Nut (3, 31, 32) mit parallelen Seitenwänden aufweist, wobei in der Nut (3, 31, 32) ein elastisches Profil (4) mit H-förmigen Querschnitt so angeordnet ist, dass wenigstens ein Teil der vertikalen Bereiche des elastischen Profils (4) parallel zu den Seitenwänden der Nut (3, 31, 32) angeordnet ist, und in wenigstens einem Teil des Raumes zwischen den vertikalen Bereichen des elastischen Profils (4) eine ausgehärte Flüssigkeit (5) so angeordnet ist, dass das Profil (4) im Bereich der Sohlfläche der Nut (3, 31, 32) mit dieser klebend verbunden ist, wobei die ausgehärtete Flüssigkeit (5) elastisch ist.

2. Flanschdichtungssystem nach Anspruch 1, wobei im horizontalen Bereich des H-förmigen Profils (4) wenigstens eine durchgehende Öffnung (6) angeordnet ist.

3. Flanschdichtungssystem nach einem der Ansprüche 1 oder 2, wobei die ausgehärtete Flüssigkeit (5) im gesamten Raum zwischen den vertikalen Bereichen des elastischen Profils (4) angeordnet ist.

4. Flanschdichtungssystem nach einem der Ansprüche 1 bis 3, wobei das elastische Profil (4) bündig mit der ebenen Fläche des Körpers (1) abschließt, in dessen Nut (3) das Profil (4) angeordnet ist.

5. Flanschdichtungssystem nach einem der Ansprüche 1 bis 3, wobei das elastische Profil (4) aus der ebenen Fläche des Körpers (1) herausragt, in dessen Nut (3) das Profil (4) angeordnet ist.

6. Flanschdichtungssystem nach einem der Ansprüche 1 bis 5, wobei die ebene Flächen der Körper (1, 2) direkt aneinander angrenzen.

7. Flanschdichtungssystem nach einem der Ansprüche 1 bis 5, wobei sich zwischen den ebenen Flächen der Körper (1, 2) ein freier Raum befindet.

8. Flanschdichtungssystem nach einem der Ansprüche 1 bis 7, wobei die ebenen Flächen der beiden Körper (1, 2) jeweils eine eingesenkte Nut (31, 32) mit parallelen Seitenwänden aufweisen, die einander gegenüber angeordnet sind.

9. Flanschdichtungssystem nach Anspruch 8 in Verbindung mit Anspruch 3, wobei in den Nuten (31, 32) das elastisches Profil (4) mit H-förmigen Querschnitt so angeordnet ist, dass wenigstens ein Teil der vertikalen Bereiche des elastischen Profils (4) parallel zu den Seitenwänden der Nuten (31, 32) angeordnet ist, und das Profil (4) im Bereich der Sohlflächen der Nuten (31, 32) mit diesen klebend verbunden ist.

10. Flanschdichtungssystem nach einem der Ansprüche 6 oder 7 in Verbindung mit Anspruch 3, wobei einer der Körper (2) keine Nut aufweist und das elastische Profil (4) mittels der ausgehärteten Flüssigkeit (5) klebend mit der ebenen Fläche dieses Körpers (2) verbunden ist.

11. Flanschdichtungssystem nach einem der Ansprüche 1 bis 8, wobei zwischen dem elastischen Profil (4) und einem der Körper (2) ein weiteres Dichtelement (7) angeordnet ist.

12. Flanschdichtungssystem nach einem der Ansprüche 1 bis 11, wobei wenigstens einer der Körper (1, 2) Öffnungen umfasst, welche so angeordnet sind, dass sie das Einfüllen der Flüssigkeit (5) in den Raum zwischen den vertikalen Bereichen des Profils (4) ermöglichen können.

13. Flanschsichtungssystem nach einem der Ansprüche 1 bis 12, wobei die Teile der vertikalen Bereiche des Profils (4), die parallel zu den Seitenwänden einer Nut (3, 31, 32) angeordnet sind, direkt an die Seitenwände der Nut (3, 31, 32) angrenzen, aber nicht mit diesen verbunden sind.

14. Flanschsichtungssystem nach einem der Ansprüche 1 bis 12, wobei sich zwischen den Teilen der vertikalen Bereiche des Profils (4), die parallel zu den Seitenwänden einer Nut (3, 31, 32) angeordnet sind, und den Seitenwänden der Nut (3, 31, 32) ein freier Raum befindet.

15. Verfahren zur Montage eines Flanschdichtungssystems nach einem der vorangehenden Ansprüche, umfassend die folgenden Schritte in der angegeben Reihenfolge:
V1: Bereitstellung zweier Körper (1, 2) mit den Merkmalen gemäß einem der Ansprüche 1, 8 oder 12;
V2: Zuschneiden eines elastischen Profils (4) mit den Merkmalen gemäß einem der Ansprüche 1 oder 2 und Einlegen des Profils (4) in die wenigstens eine Nut (3, 31);
V3: Einfüllen einer aushärtenden Flüssigkeit (5) in den Raum zwischen den vertikalen Bereichen des elastischen Profils (4) und Aushärten der Flüssigkeit (5).

16. Verfahren nach Anspruch 15, wobei das Verbindung zwischen den beiden Körpern (1, 2) am Ende von Schritt V2 oder V3 erfolgt.

17. Verfahren nach Anspruch 16 gemäß der zweiten Alternative, wobei in Schritt V3 ein weiteres Dichtelement (7) oberhalb dem elastischen Profil (4) angeordnet wird, nachdem die Flüssigkeit (5) eingefüllt wird und bevor die beiden Körper (1, 2) verbunden werden.

## Claims

1. Flange-sealing system comprising two bodies (1, 2) which each have a planar surface and are connected to one another such that the surfaces are directed towards one another, wherein at least one of the bodies (1, 2) has a groove (3, 31, 32) which is recessed in the planar surface and has parallel side walls, wherein an elastic profile (4) of H-shaped cross section is arranged in the groove (3, 31, 32) such that at least part of the vertical regions of the elastic profile (4) is arranged parallel to the side walls of the groove (3, 31, 32), and a cured liquid (5) is arranged in at least part of the space between the vertical regions of the elastic profile (4) such that the profile (4) is adhesively bonded to the groove (3, 31, 32) in the region of the base surface thereof, wherein the cured liquid (5) is elastic.

2. Flange-sealing system according to Claim 1, wherein at least one through-opening (6) is arranged in the horizontal region of the H-shaped profile (4).

3. Flange-sealing system according to either of Claims 1 and 2, wherein the cured liquid (5) is arranged in the entire space between the vertical regions of the elastic profile (4).

4. Flange-sealing system according to one of Claims 1 to 3, wherein the elastic profile (4) terminates flush with the planar surface of the body (1) in the groove (3) of which the profile (4) is arranged.

5. Flange-sealing system according to one of Claims 1 to 3, wherein the elastic profile (4) projects out of the planar surface of the body (1) in the groove (3) of which the profile (4) is arranged.

6. Flange-sealing system according to one of Claims 1 to 5, wherein the planar surfaces of the bodies (1, 2) are directly adjacent to one another.

7. Flange-sealing system according to one of Claims 1 to 5, wherein a free space is located between the planar surfaces of the bodies (1, 2).

8. Flange-sealing system according to one of Claims 1 to 7, wherein the planar surfaces of the two bodies (1, 2) each have a recessed groove (31, 32) with parallel side walls, said grooves being arranged opposite one another.

9. Flange-sealing system according to Claim 8 in conjunction with Claim 3, wherein the elastic profile (4) of H-shaped cross section is arranged in the grooves (31, 32) such that at least part of the vertical regions of the elastic profile (4) is arranged parallel to the side walls of the grooves (31, 32), and a profile (4) is adhesively bonded to the grooves (31, 32) in the region of the base surfaces thereof.

10. Flange-sealing system according to either of Claims 6 and 7 in conjunction with Claim 3, wherein one of the bodies (2) has no groove and the elastic profile (4) is adhesively bonded to the planar surface of said body (2) by means of the cured liquid (5).

11. Flange-sealing system according to one of Claims 1 to 8, wherein a further sealing element (7) is arranged between the elastic profile (4) and one of the bodies (2).

12. Flange-sealing system according to one of Claims 1 to 11, wherein at least one of the bodies (1, 2) comprises openings which are arranged such that they make it possible for the liquid (5) to be introduced into the space between the vertical regions of the profile (4).

13. Flange-sealing system according to one of Claims 1 to 12, wherein the parts of the vertical regions of the profile (4) which are arranged parallel to the side walls of the groove (3, 31, 32) are directly adjacent to the side walls of the groove (3, 31, 32), but are not connected thereto.

14. Flange-sealing system according to one of Claims 1 to 12, wherein a free space is located between the side walls of a groove (3, 31, 32) and the parts of the vertical regions of the profile (4) which are arranged parallel to the side walls of the groove (3, 31, 32).

15. Method for assembling a flange-sealing system according to one of the preceding claims, comprising the following steps in the given order:
V1: Supplying two bodies (1, 2) which have the features according to one of Claims 1, 8 and 12;
V2: Cutting to size an elastic profile (4) which has the features according to either of Claims 1 and 2, and positioning the profile (4) in the at least one groove (3, 31); and
V3: Introducing a cured liquid (5) into the space between the vertical regions of the elastic profile (4), and curing the liquid (5).

16. Method according to Claim 15, wherein connection between the two bodies (1, 2) takes place at the end of step V2 or V3.

17. Method according to Claim 16 according to the second alternative, wherein, in step V3, a further sealing element (7) is arranged above the elastic profile (4) once the liquid (5) has been introduced and before the two bodies (1, 2) are connected.

## Revendications

1. Système de joint d'étanchéité de bride comportant deux corps (1, 2), lesquels comprennent respectivement une surface plane et sont reliés l'un à l'autre de telle sorte que les surfaces soient tournées l'une vers l'autre, au moins l'un des corps (1, 2) comprenant une rainure (3, 31, 32) renfoncée dans la surface plane et dotée de parois latérales parallèles, un profilé élastique (4) de section transversale en forme de H étant disposé dans la rainure (3, 31, 32) de telle sorte qu'au moins une partie des régions verticales du profilé élastique (4) soit disposée parallèlement aux parois latérales de la rainure (3, 31, 32), et un liquide durci (5) étant disposé dans au moins une partie de l'espace entre les régions verticales du profilé élastique (4) de telle sorte que le profilé (4) soit relié de manière adhésive à la rainure (3, 31, 32) dans la région de la surface de base de celle-ci, le liquide durci (5) étant élastique.

2. Système de joint d'étanchéité de bride selon la revendication 1, au moins une ouverture traversante (6) étant disposée dans la région horizontale du profilé (4) en forme de H.

3. Système de joint d'étanchéité de bride selon l'une des revendications 1 et 2, le liquide durci (5) étant disposé dans tout l'espace entre les régions verticales du profilé élastique (4).

4. Système de joint d'étanchéité de bride selon l'une des revendications 1 à 3, le profilé élastique (4) se terminant en affleurement avec la surface plane du corps (1) dans la rainure (3) duquel le profilé (4) est disposé.

5. Système de joint d'étanchéité de bride selon l'une des revendications 1 à 3, le profilé élastique (4) dépassant de la surface plane du corps (1) dans la rainure (3) duquel le profilé (4) est disposé.

6. Système de joint d'étanchéité de bride selon l'une des revendications 1 à 5, les surfaces planes des corps (1, 2) étant directement adjacentes l'une à l'autre.

7. Système de joint d'étanchéité de bride selon l'une des revendications 1 à 5, un espace libre se situant entre les surfaces planes des corps (1, 2).

8. Système de joint d'étanchéité de bride selon l'une des revendications 1 à 7, les surfaces planes des deux corps (1, 2) comprenant respectivement une rainure renfoncée (31, 32) dotée de parois latérales parallèles qui sont disposées en regard l'une de l'autre.

9. Système de joint d'étanchéité de bride selon la revendication 8 en association avec la revendication 3, le profilé élastique (4) de section transversale en forme de H étant disposé dans les rainures (31, 32) de telle sorte qu'au moins une partie des régions verticales du profilé élastique (4) soit disposée parallèlement aux parois latérales des rainures (31, 32), et le profilé (4) étant relié de manière adhésive aux rainures (31, 32) dans la région des surfaces de base de celles-ci.

10. Système de joint d'étanchéité de bride selon l'une des revendications 6 et 7 en association avec la revendication 3, l'un des corps (2) ne comprenant aucune rainure et le profilé élastique (4) étant relié de manière adhésive à la surface plane de ce corps (2) au moyen du liquide durci (5).

11. Système de joint d'étanchéité de bride selon l'une des revendications 1 à 8, un autre élément d'étanchéité (7) étant disposé entre le profilé élastique (4) et l'un des corps (2).

12. Système de joint d'étanchéité de bride selon l'une des revendications 1 à 11, au moins l'un des corps (1, 2) comportant des ouvertures, lesquelles sont disposées de telle sorte qu'elles peuvent permettre l'introduction du liquide (5) dans l'espace entre les régions verticales du profilé (4).

13. Système de joint d'étanchéité de bride selon l'une des revendications 1 à 12, les parties des régions verticales du profilé (4) qui sont disposées parallèlement aux parois latérales d'une rainure (3, 31, 32) étant directement adjacentes aux parois latérales de la rainure (3, 31, 32), mais n'étant pas reliées à celles-ci.

14. Système de joint d'étanchéité de bride selon l'une des revendications 1 à 12, un espace libre se situant entre les parties des régions verticales du profilé (4), qui sont disposées parallèlement aux parois latérales d'une rainure (3, 31, 32), et les parois latérales de la rainure (3, 31, 32).

15. Procédé de montage d'un système de joint d'étanchéité de bride selon l'une des revendications précédentes, comportant les étapes suivantes dans l'ordre indiqué :
V1 : fourniture de deux corps (1, 2) présentant les caractéristiques selon l'une des revendications 1, 8 ou 12 ;
V2 : découpe d'un profilé élastique (4) présentant les caractéristiques selon l'une des revendications 1 ou 2 et insertion du profilé (4) dans l'au moins une rainure (3, 31) ;
V3 : introduction d'un liquide durcissant (5) dans l'espace entre les régions verticales du profilé élastique (4) et durcissement du liquide (5).

16. Procédé selon la revendication 15, la liaison entre les deux corps (1, 2) ayant lieu à la fin de l'étape V2 ou V3.

17. Procédé selon la revendication 16 selon la deuxième alternative, un autre élément d'étanchéité (7) étant disposé au-dessus du profilé élastique (4) à l'étape V3, après que le liquide (5) a été introduit et avant que les deux corps (1, 2) ne soient reliés.
